# EUROPÄISCHE PATENTSCHRIFT

(11) **EP 0 938 177 B1**
(45) Veröffentlichungstag und Bekanntmachung des Hinweises auf die Patenterteilung: **04.12.2002**
(21) Anmeldenummer: 99100162.9
(22) Anmeldetag: 07.01.1999
(51) Int. Cl.: H02G 3/04

(54) **Kabelkanal**
Cable duct
Conduite de câbles

(30) Priorität: 24.02.1998 DE 29803220 U
(43) Veröffentlichungstag der Anmeldung: 25.08.1999
(73) Patentinhaber: REHAU AG + Co, 95111 Rehau (DE)
(72) Erfinder: Schinzel, Hartmut c/o Rehau AG + Co., 95111 Rehau (DE); Zielke, Peter c/o Rehau AG + Co., 95111 Rehau (DE)

(56) Entgegenhaltungen:
- EP-A- 0 446 475

## Beschreibung

Die Erfindung betrifft einen Kabelkanal wie Brüstungskanal und dergleichen, bestehend aus einem U-förmigen Kanalgrundelement und einem dessen Öffnung verschließenden Deckelteil, wobei die Rückseite des Kanalgrundelementes über Halter mit der Wand verbindbar ist und wobei an die Basis und/oder Teilbereiche der Rückseite des Kanalgrundelements langgestreckte Halteschienen angeordnet sind, in deren Rastaufnahmen Lüftungsprofile als Hohlraumabdeckungen eingeclipst sind.

Aus der EP 0 446 475 B1 ist ein gattungsgemäßer Kabelkanal bekannt. Dieser Kabelkanal besitzt ein Gehäuse, welches an einer Seite eine durch einen Deckel verschließbare Öffnung aufweist. Wenigstens eine der Seitenwände und die Bodenaußenseite besitzen durchlaufende Rinnen mit je einer Rinnenöffnung, deren Begrenzungswandungen bereichsweise mit Kupplungsvorsprüngen ausgerüstet sind. An die Kupplungsvorsprünge der Rinnen sind die Gegenkupplungen eines Halters für Profile einsetzbar. Diese Profile sind sogenannte Konvektionsprofile. Der Halter selbst ist wabenförmig gestaltet und jede Wabe besteht aus Wandung und Querwandung, die paarweise mit Abstand voneinander einen Raum umgrenzend angeordnet sind. Von der einen Wandung des Wandungspaares ragen Gegenkupplungen ab, mit denen der Halter am Kabelkanal verrastbar ist. Von den Querwandungen des Wandungspaares ragen Rastfahnen mit einem Aufnahmeraum ab, in welchen jeweils ein Konvektionsgitterprofil eingeclipst werden kann.

Mit derartigen Verkleidungssystemen bei Brüstungskanälen werden in der Regel Heizkörper, Fenstemischen oder ähnliche Räume abgedeckt, wobei die Konvektionsgitterprofile beispielsweise aus Kunststoff, Stahlblech oder ähnlichen Materialien gestaltet sein können. Da diese Konvektionsgitterprofile am Halter jeweils nur eingeclipst sind, können die Einzelprofile zur Reinigung des verkleideten Raumes durch Überwindung der Rastkräfte einfach abgenommen werden. Diese Abnahme der Einzelprofile erfolgt in der Regel ohne Werkzeuge.

In der Zeit zunehmenden Vandalismusses kommt es daher vermehrt vor, daß solche Verkleidungsprofile unbefugt aus ihrem Sitz entfernt werden und daß damit der gesamte Aufbau des verkleideten Brüstungskanals wenn nicht zerstört, so doch stark negativ beeinträchtigt wird. Hier setzt die Erfindung ein, die es sich zur Aufgabe gestellt hat, derartige Lüftungsprofile bei Brüstungskanälen und dergleichen gegen unbefugtes Entnehmen zu sichern. Erfindungsgemäß wird dazu vorgeschlagen, daß die Halteschienen neben den Rastaufnahmen für die einzelnen Lüftungsprofile in definiertem Abstand von jeder einzelnen Rastaufnahme ein stegförmiges Auflagerelement für das freie Ende des Lüftungsprofils aufweist, und daß in einer Aufnahmenut am freien Ende des Lüftungsprofils ein Sicherungsclip eingesetzt ist, dessen endseitiger Sicherungshaken halternd in eine Rastaufnahme an der Rückseite des Auflagerelementes eingreift.

Vorteilhaft besitzt das Auflagerelement an seinem freien Ende einen nach oben offenen, halbkreisförmigen Äbschluß, welcher innenrandseitig von einem zum Halbkreis gerichteten Rasthaken begrenzt ist. Das Lüftungsprofil dagegen hat an seinem zum Auflagerelement gerichteten freien Ende eine rinnenförmige Aufnahme, welche nach innengerichtete, abgerundete Außenwände aufweist und einen durchlaufenden Längsschlitz besitzt. Mit dieser rinnenförmigen Aufnahme wird das Lüftungsprofil in den nach oben offenen, halbkreisförmigen Abschluß des Auflagerelementes eingesetzt. Dabei wird die innere der abgerundeten Außenwände des Lüftungsprofils mit dem zum Halbkreis gerichteten Rasthaken des Auflagerelementes verrastet.

Der Sicherungsclip selbst ist in den durchlaufenden Längsschlitz der rinnenförmigen Aufnahme am freien Ende des Lüftungsprofils eingebracht und dort drehbeweglich und/oder längsverschieblich gelagert. Vorteilhaft besitzt der Sicherungsclip eine seitliche Eingriffsöffnung für eine Handhabe, mit der der Clip aus seinem Sitz entfernt werden kann. Erst wenn der Sicherungsclip aus seiner Sicherungslage entfernt ist, kann das Lüftungsprofil aus seinem Sitz in der Halteschiene entnommen werden. Da diese Lösung des Sicherungsclips nicht ohne Werkzeug erfolgen kann, sind die Lüftungsprofile in ihrem Sitz an der Halteschiene gegen unbefugtes Entfernen gesichert.

In der Zeichnung sind Ausführungsbeispiele des erfindungsgemäßen Kabelkanals mit Lüftungsprofilen und Sicherungsclips schematisch dargestellt; es zeigt:
- Figur 1:: eine Halteschiene mit Lüftungsprofilen und Sicherungsclips
- Figur 2:: eine andere Verrasterung des Sicherungsclips als in Figur 1
- Figur 3:: eine weitere Verrasterungsmöglichkeit des Sicherungsclips
- Figur 4:: den Sicherungsclip mit Eingriffsöffnung für die Handhabe

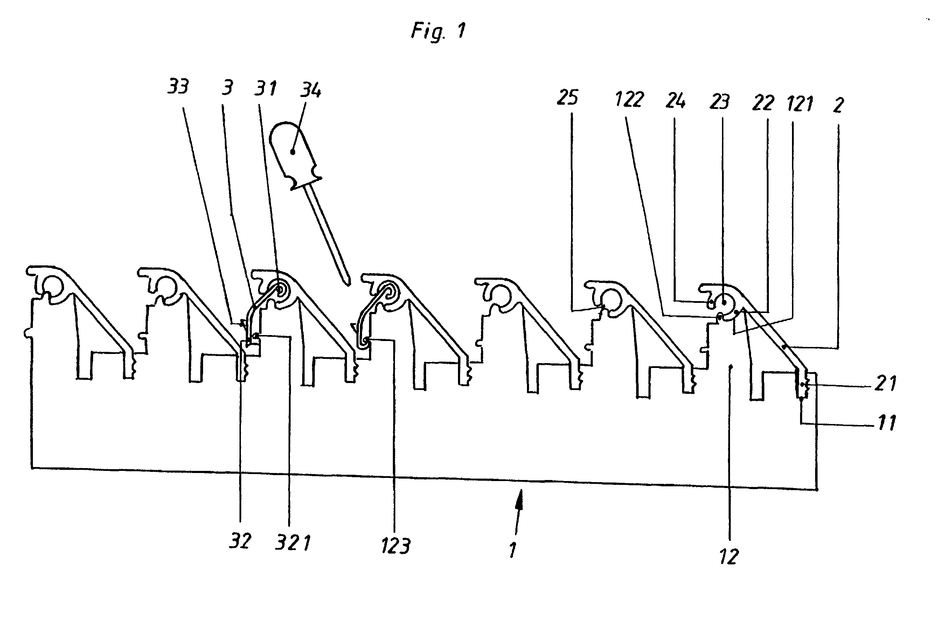

Figur 1 zeigt die Halteschiene 1 mit den Lüftungsprofilen 2 und dem Sicherungsclip 3. Die Halteschiene 1 besitzt Rastaufnahmen 11, in welche die freien Enden 21 der Lüftungsprofile 2 eingerastet sind.

Die Halteschienen 1 sind ferner mit stegförmigen Auflagerelementen 12 ausgestattet, welche an ihren freien Enden einen nach oben offenen, halbkreisförmigen Abschluß 121 besitzen. Dieser halbkreisförmige Abschluß 121 ist an seinem inneren Rand von einem zum halbkreisförmigen Abschluß 121 gerichteten Rasthaken 122 begrenzt. In den halbkreisförmigen Abschluß 121 ist die innere, abgerundete Außenwand 22 der rinnenförmigen Aufnahme 23 eingesetzt und dort verrastet. Die rinnenförmige Aufnahme 23 am freien Ende des Lüftungsprofils 2 besitzt einen durchlaufenden Längsschlitz 25.

In die rinnenförmige Aufnahme 23 am freien Ende des Lüftungsprofils 2 ist der Sicherungsclip 3 eingesetzt. Der Sicherungsclip 3 ist mit seinem Kopfbereich 31 in das Lumen der rinnenförmigen Aufnahme 23 eingebracht und dort drehbeweglich und/oder längsverschieblich gelagert.

An seinem gegenüberliegenden freien Ende 32 ist ein Sicherungshaken 321 angeordnet, welcher halternd eine Rastaufnahme 123 an der Rückseite des stegförmigen Auflagerelementes 12 übergreift.

Der Sicherungsclip 3 besitzt eine seitliche Eingriffsöffnung 33, in welche eine Handhabe 34, z B ein Schraubendreher einsetzbar ist. Mit dieser Handhabe 34 kann der Sicherungsclip 3 aus seinem Rastsitz am stegförmigen Auflagerlement 12 entfernt werden.

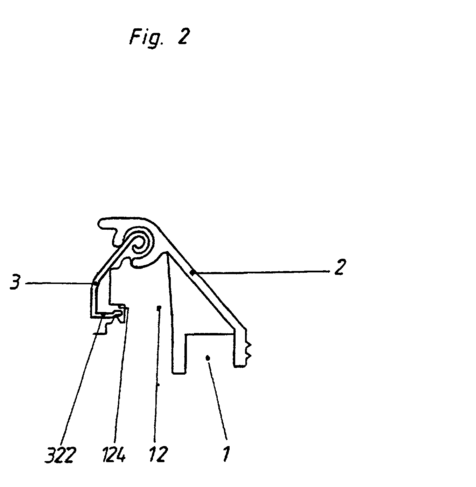

Figur 2 zeigt in vergrößerter Form eine andere Verrasterungsmöglichkeit des Sicherungsclips 3 am stegförmigen Auflagerelement 12 der Halteschiene 1. Anstelle der Rastaufnahme 321 ist an der Rückseite des Auflagerelementes 12 eine Nut 124 eingeformt, in welche das abgewinkelte freie Ende 322 des Sicherungsclips 3 halternd eingreift.

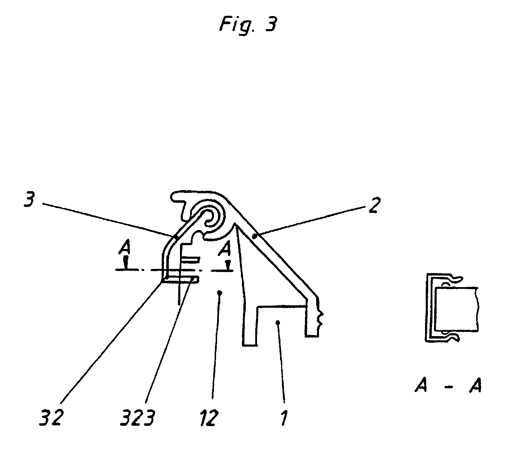

Figur 3 zeigt eine weitere Verrasterungsmöglichkeit des Sicherungsclips 3, wobei das freie Ende 32 des Sicherungsclips 3 in Form einer Gabel 323 das stegförmige Auflagerelement 12 der Halteschiene 1 umgreift. Die Form der Umgreifung ist durch die Schnittdarstellung A-A in diesem Teilbereich wiedergegeben.

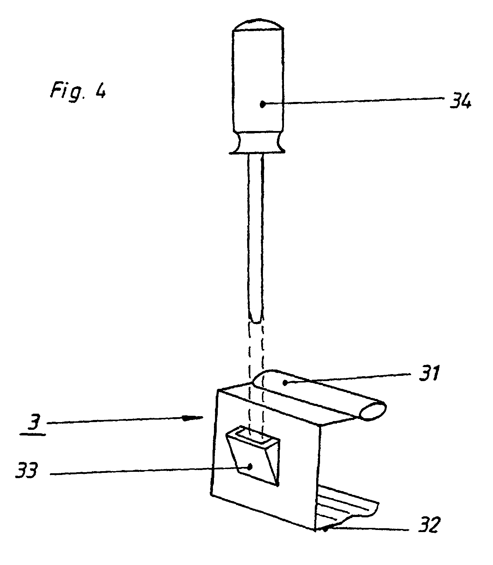

Figur 4 zeigt schließlich noch den Sicherungsclip 3 in vergrößerter Darstellung mit der Eingriffsöffnung 33 für die Handhabe 34. Gleiche Merkmale haben bei der Darstellung der Figuren 2 bis 4 gleiche Bezugszahlen erhalten wie in Figur 1.

## Patentansprüche

**1.** Kabelkanal wie Brüstungskanal und dergleichen, bestehend aus einem U-förmigen Kanalgrundelement und einem dessen Öffnung verschließenden Deckelteil, wobei die Rückseite des Kanalgrundelements über Halter mit der Wand verbindbar ist und wobei an die Basis und/oder Teilbereiche der Rückseite des Kanalgrundelementes langgestreckte Halteschienen angeordnet sind, in deren Rastaufnahmen Lüftungsprofile als Hohlraumabdeckungen eingeclipst sind, **dadurch gekennzeichnet, daß** die Halteschienen (1) neben den Rastaufnahmen (11) für die einzelnen Lüftungsprofile (2) in definiertem Abstand von jeder einzelnen Rastaufnahme (11) ein stegförmiges Auflagerelement (12) für das freie Ende (21) des Lüftungsprofils aufweist, und daß in einer rinnenförmigen Aufnahme (23) am freien Ende des Lüftungsprofils (2) ein Sicherungsclip (3) eingesetzt ist, dessen endseitiger Sicherungshaken (321) halternd eine Rastaufnahme (123) an der Rückseite des Auflagerelements (12) übergreift.

**2.** Kabelkanal nach Anspruch 1, **dadurch gekennzeichnet, daß** das Auflagerelement (12) an seinem freien Ende einen nach oben offenen, halbkreisförmigen Abschluß (121) besitzt, welcher innenrandseitig von einem zum halbkreisförmigen Abschluß (121) gerichteten Rasthaken (122) begrenzt ist.

**3.** Kabelkanal nach Ansprüchen 1 und 2, **dadurch gekennzeichnet, daß** das Lüftungsprofil (2) an seinem zum Auflagerelement (12) gerichteten freien Ende eine rinnenförmige Aufnahme (23) besitzt, welche nach innengerichtete, abgerundete Außenwände (22, 24) aufweist und einen durchlaufenden Längsschlitz (25) hat.

**4.** Kabelkanal nach Ansprüchen 2 und 3, **dadurch gekennzeichnet, daß** die innere der abgerundeten Außenwände (22) des Lüftungsprofils (2) in den halbkreisförmigen Abschluß (121) am freien Ende des Auflagerelementes (12) eingreift und mit dem zum halkreisförmigen Abschluß (121) gerichteten Rasthaken (122) verrastet.

**5.** Kabelkanal nach Ansprüchen 1 bis 3, **dadurch gekennzeichnet, daß** der Sicherungsclip (3) mit seinem Kopfbereich (31) durch den Längsschlitz (25) in die rinnenförmige Aufnahme (23) am freien Ende des Lüftungsprofils (2) eingebracht und dort drehbeweglich und/oder längsverschieblich gelagert ist.

**7.** Kabelkanal nach Ansprüchen 1, 3 und 5, **dadurch gekennzeichnet, daß** der Sicherungsclip (3) eine seitliche Eingriffsöffnung (33) für eine Handhabe (34) aufweist.

## Claims

**1.** Routing trunkings and dado trunkings and similar articles, consisting of a U-shaped trunking base element and a covering section which closes the opening of this, in which the rear of the trunking base element can be attached with holders to the wall and in which longitudinal retaining rails are arranged on the base and/or parts of the rear of the trunking base element, in the receivers of which ventilation profiles are clipped as cavity covers, **characterised by**: the retaining rails (1) beside the receivers (11) have a web-shaped contact element (12) for the free end (21) of the individual ventilation profile (2) at defined intervals from each individual receiver (11) and that a securing clip (3) is inserted in a trough-shaped receiver (23) at the free end of the ventilation profile (2), whose end securing hook (321) engages in a receiver (123) to hold the rear of the contact element (12).

**2.** Routing trunking according to Claim 1, **characterised by**: the free end of the contact element (12) has a semicircular end (121) open at the top, which is restricted at the inner edge by a hook (122) facing the semicircular end (121).

**3.** Routing trunking according to Claims 1 and 2, **characterised by**: the ventilation profile (2) has a trough-shaped receiver (23) at the free end facing the contact element (12), which has inwards-facing, rounded outside walls (22, 24) and a continuous longitudinal slot (25).

**4.** Routing trunking according to Claims 2 and 3, **characterised by**: the innermost of the rounded outside walls (22) of the ventilation profile (2) engages in the semicircular end (121) at the free end of the contact element (12) and clips into the hook (122) facing the semicircular end (121).

**5.** Routing trunking according to Claims 1 to 3, **characterised by**: the head (31) of the securing clip (3) is inserted through the longitudinal slot (25) in the trough-shaped receiver (23) at the free end of the ventilation profile (2) where it is capable of rotary movement and/or longitudinal sliding.

**7.** Routing trunking according to Claims 1, 3 and 5, **characterised by**, the securing clip (3) has an opening (33) at the side for a tool (34).

## Revendications

**1.** Goulotte de distribution telle qu'une goulotte d'appareillage ou des équipements similaires, comprenant un élément de base de goulotte en forme de U et un couvercle fermant son ouverture, la face arrière de l'élément de base de la goulotte pouvant être reliée au mur par des supports et des rails de fixation allongés étant disposés à la base et/ou dans des zones partielles de l'élément de base de la goulotte, dans les évidements d'encliquetage desquels sont clipsés des profilés d'aération sous forme de recouvrements creux, **caractérisé en ce que** les rails de fixation (1) présentent, à côté des évidements d'encliquetage (11) pour les différents profilés d'aération (2), un élément d'appui en forme d'entretoise (12) pour l'extrémité libre (21) du profilé d'aération à une distance définie de chaque évidement d'encliquetage individuel (11) et **en ce que**, dans un logement en forme de rigole (23) à l'extrémité libre du profilé d'aération (2), un clip se sécurité (3) dont le crochet de sécurité d'extrémité (321) enjambe, en assurant le maintien, un évidement d'encliquetage (123) est monté à la face arrière de l'élément d'appui (12).

**2.** Goulotte de distribution selon la revendication 1, **caractérisée en ce que** l'élément d'appui (12) comporte à son extrémité libre une fermeture en demi-cercle, ouverte vers le haut (121), limitée du côté du bord intérieur par un crochet à cran (122) dirigé vers la fermeture en demi-cercle (121).

**3.** Goulotte de distribution selon les revendications 1 et 2, **caractérisée en ce que** le profilé d'aération (2) comporte à son extrémité libre dirigée vers l'élément d'appui (12) un logement en forme de rigole (23), qui présente des parois extérieures (22, 24) arrondies, dirigées vers l'intérieur ainsi qu'une fente longitudinale (25) continue.

**4.** Goulotte de distribution selon les revendications 2 et 3, **caractérisée en ce que** la paroi intérieure des parois extérieures arrondies (22) du profilé d'aération (2) prend dans la fermeture en demi-cercle (121) à l'extrémité libre de l'élément d'appui (12) et encliquette avec le crochet à cran (122) dirigé vers la fermeture en demi-cercle (121).

**5.** Goulotte de distribution selon les revendications 1 à 3, **caractérisée en ce que** la zone de la tête (31) du clip de sécurité (3) pénètre à travers la fente longitudinale (25) dans le logement en forme de rigole (23) à l'extrémité libre du profilé d'aération (2) où il est mobile en rotation et/ou en translation longitudinale.

**7.** Goulotte de distribution selon les revendications 1, 3 et 5, **caractérisée en ce que** le clip de sécurité (3) présente une ouverture de préhension latérale (33) pour une manette (34).
